# EUROPEAN PATENT APPLICATION

(11) **EP 4 802 969 A1**
(43) Date of publication of application: **09.09.2026**
(21) Application number: 25227030.1
(22) Date of filing: 23.12.2025
(51) Int. Cl.: A47J 45/07

(54) **DETACHABLE POT HANDLE**

(30) Priority: 03.03.2025 CN 202520363438 U
(71) Applicant: Yongkang Jinyu Industry and Trade Co., Ltd., Jinhua, Zhejiang 321300 (CN)
(72) Inventor: YU, Xuan, Jinhua, 321300 (CN)
(74) Representative: Chung, Hoi Kan

(57) **Abstract**

The present application discloses a detachable pot handle, including an upper handle and a lower handle arranged on the upper handle and capable of being opened and closed, where the upper handle is provided with a clamping device and a quick-release mechanism for prompting the upper handle to be restored and the clamping device to be released, the quick-release mechanism includes a positioning pin arranged on the upper handle, a rotating member rotating back and forth with the positioning pin as a fulcrum is arranged inside the upper handle, a pressing member is arranged on the rotating member, a sliding assembly sliding back and forth along the length direction of the upper handle is arranged inside the upper handle, a front fixing seat and a rear fixing seat re arranged inside the upper handle, the front fixing seat and the rear fixing seat are integrally formed with the upper handle.

## Description

### TECHNICAL FIELD

The present application relates to the technical field of kitchenware, in particular to a detachable pot handle.

### BACKGROUND

It is known that kitchenware is a general term for kitchen utensils. Pots commonly used in a kitchen are generally composed of a pot body and a pot handle. The pot handle is used to connect the pot body and for a user to hold. Generally, the pot handle is directly fixed to the pot body by screws or rivets, so as to achieve the purpose of being tightly connected to the pot body. This structure for fixing the handle and the lug by screws or rivets is relatively simple, mainly consisting of the handle and the lug that are fixed to the reserved position of the pot by screws or rivets, but other corresponding utensils are required during the installation and disassembly. In daily use, the complexity of this disassembly makes the user usually not remove the pot handle. Therefore, this pot handle occupies a large space when stored, and it is also inconvenient for the user to clean and carry. As a result, a Chinese application patent with authorization announcement number CN221671526U disclosed a quick-release pot handle, in which the quick-release transmission mechanism has a relatively complex structure, which not only increases the production and manufacturing cost, but also makes it difficult to press the button during actual use, and even requires a lot of force. Therefore, improvements are urgently needed to meet the user's demand for easy pressing and opening.

### SUMMARY

### (1). Technical issues that need to be resolved

In view of the deficiencies in the prior art, the present application provides a detachable pot handle, which has a reasonable design, reduces the difficulty of production and manufacturing, is more conducive to allowing users to press more easily and operate more simply in the later stage, and is more conducive to meeting the use needs of modern users.

### (2). Technical solutions that need to be adopted

In order to achieve the above purpose, the technical solution adopted by the present application is:
A detachable pot handle, including an upper handle and a lower handle arranged on the upper handle and capable of be opened and closed, where the upper handle is provided with a clamping device for clamping a utensil, the upper handle is provided with a quick-release mechanism for prompting the upper handle to be restored and the clamping device to be released, the quick-release mechanism includes a positioning pin arranged on the upper handle, a rotating member rotating back and forth with the positioning pin as a fulcrum is arranged inside the upper handle, a pressing member is arranged on the rotating member, a sliding assembly sliding back and forth along the length direction of the upper handle is arranged inside the upper handle, a front fixing seat and a rear fixing seat for limiting the forward and backward movement of the sliding assembly are arranged inside the upper handle, and both the front fixing seat and the rear fixing seat are integrally formed with the upper handle.

Preferably, the rotating member includes a rotating body arranged on the positioning pin, a push rod is arranged on a lower end surface of one side of the rotating body, a protrusion is arranged on an upper end surface of one side of the rotating body, the pressing member is arranged on the protrusion, an upper slope is arranged on the push rod, the sliding assembly includes a sliding member arranged inside the upper handle and moving back and forth, a front through hole is formed in the front fixing seat, a rear through hole is formed in the rear fixing seat, a lower slope matched with the upper slope is arranged on the sliding member, and a reset member is arranged on the sliding member contacting the front fixing seat.

Preferably, a mounting hole for the push rod to move back and forth is formed inside the sliding member, and the lower slope is arranged on one side of the mounting hole.

Preferably, the lower slope is arranged on the sliding member.

Preferably, the rotating body, the push rod and the protrusion are integrally formed.

Preferably, the clamping device includes a connecting rod fixedly connected to a front end of the lower handle, a rake body integrally formed with the connecting rod is arranged on the connecting rod, a front locking seat is arranged on the rake body, a positioning disc is arranged on the connecting rod, and the positioning pin passes through the positioning disc.

Preferably, the connecting rod and the lower handle are fixedly connected together via a fastener.

Preferably, a rear locking seat is arranged on the upper handle corresponding to the front locking seat.

Preferably, the lower handle includes a handle body fixedly connected to the clamping device, a limiting seat is arranged on an upper end surface of a rear side of the handle body, an inclined surface is arranged on a rear end surface of the sliding assembly, a clamping groove used to be matched with the rear end surface of the sliding assembly with the inclined surface is arranged on the limiting seat, a fixing rod is arranged on a lower end surface of a front part of the handle body, a limiting rod is arranged on a lower end face of a front part of the upper handle, and the fixing rod and the limiting rod are connected via a return member.

Preferably, a protective cover is arranged below a front end of the upper handle.

### 3. Technical effects needed to be achieved

Compared with the prior art, the present application has the beneficial effect as follows.

Firstly, a quick-release mechanism of the present application includes a positioning pin arranged on an upper handle, a rotating member rotating back and forth with a positioning pin as a fulcrum is arranged inside the upper handle, a pressing member is arranged on the rotating member, a sliding assembly sliding back and forth along the length direction of the upper handle is arranged inside the upper handle, a front fixing seat and a rear fixing seat for limiting the forward and backward movement of the sliding assembly are arranged inside the upper handle, and both the front fixing seat and the rear fixing seat are integrally formed with the upper handle. The present application has a reasonable design, reduces the difficulty of production and manufacturing, is more conducive to allowing users to press more easily and operate more simply in the later stage, and is more conducive to meeting the use needs of modern users.

Secondly, the rotating member of the present application includes a rotating body arranged on the positioning pin, a push rod is arranged on a lower end surface of one side of the rotating body, a protrusion is arranged on an upper end surface of one side of the rotating body, the pressing member is arranged on the protrusion, an upper slope is arranged on the push rod, the sliding assembly includes a sliding member arranged inside the upper handle and moving back and forth, a front through hole is formed in the front fixing seat, a rear through hole is formed in the rear fixing seat, a lower slope matched with the upper slope is arranged on the sliding member, and a reset member is arranged on the sliding member contacting the front fixing seat. This arrangement is reasonable, the structure is simpler, the difficulty of production and manufacturing is reduced, and it is conductive to reducing the production and manufacturing cost, and at the same time, it is easier, simpler and more convenient to operate, which greatly reduces the operating burden of the users.

### BRIEF DESCRIPTION OF DRAWINGS

FIG. 1 is a schematic structural diagram of the present application;
FIG. 2 is a schematic diagram of the present application in a front view direction;
FIG. 3 is a schematic diagram of the present application in a top view direction;
FIG. 4 is a cross-sectional view of FIG. 3 along the A-A direction;
FIG. 5 is an exploded schematic diagram of the present application;
FIG. 6 is a schematic diagram of Embodiment 1 of a rotating member structure of the present application;
FIG. 7 is a schematic diagram of Embodiment 1 of a sliding member of the present application
FIG. 8 is a schematic diagram of Embodiment 1 of the cooperation between a sliding assembly and a clamping device of the present application;
FIG. 9 is an overall schematic diagram of Embodiment 1 of the cooperation between the sliding assembly and the clamping device of the present application;
FIG. 10 is a schematic diagram of Embodiment 2 of the rotating member structure of the present application;
FIG. 11 is a schematic diagram of Embodiment 2 of the sliding member of the present application;
FIG. 12 is an exploded schematic diagram of Embodiment 2 of the rotating member and the sliding member as a whole of the present application;
FIG. 13 is an overall schematic diagram of Embodiment 2 of the rotating member and the sliding member as a whole of the present application; and
FIG. 14 is a schematic diagram of the assembly of a handle body and a limiting seat of the present application.

Description of reference signs: 1. Upper handle; 2. Lower handle; 3. Clamping device; 4. Quick-release mechanism; 11, Protective cover; 21, Handle body; 22, Limiting seat; 23, Clamping groove; 24, Fixing rod; 25, Limiting rod; 26, Return member; 31, Connecting rod; 32, Front locking seat; 33, Positioning disc; 34, Rear locking seat; 41, Positioning pin; 42, Rotating member; 43, Pressing member; 44, Sliding assembly; 45, Front fixing seat; 46, Rear fixing seat; 421, Rotating body; 422, Push rod; 423, Protrusion; 441, Sliding member; 442, Front through hole; 443, Rear through hole; 444, Reset member.

### DETAILED DESCRIPTION OF THE EMBODIMENTS

In the description of the present application, it should be noted that when an element is referred to as being "fixed on" or "arranged on" another element, it may be directly on the other element or indirectly on the other element. When an element is referred to as being "connected to" another element, it can be directly connected to the other element or indirectly connected to the other element.

In the description of the present application, it should be noted that the orientation or positional relationship indicated by the terms "center", "length", "width", "thickness", "upper", "lower", "front", "back", "left", "right", "vertical", "horizontal", "top", "bottom", "inside", "outside", etc., is based on the orientation or positional relationship shown in the drawings, or the orientation or positional relationship in which the product of the present application is usually placed is only for the convenience of describing the present application and simplifying the description, rather than indicating or implying that the device or element referred to must have a specific orientation and be constructed and operated in a specific orientation, so it cannot be understood as a limitation to the present application. Furthermore, the terms "first", "second", "third", etc., are merely used to differentiate descriptions and are not to be construed as indicating or implying relative importance. Thus, the features defined as "first" or "second" may be explicitly or implicitly defined as including one or more of the features. In the description of the present application, "a plurality" means two or more than two, unless otherwise clearly and specifically defined. "Several" means one or more than one, unless otherwise clearly and specifically defined.

In the description of the present application, it should also be noted that, unless otherwise clearly specified and limited, the terms "arranged", "installed", "connected" and "connection" should be understood in a broad sense, for example, it can be a fixed connection, a detachable connection, or an integral connection; it can be a mechanical connection; it can be directly connected, indirectly connected through an intermediate medium, or it can be the internal communication between two elements. For those of ordinary skill in the art, the specific meanings of the above terms in the present application can be understood according to specific circumstances.

In order to make the purpose, technical solutions and advantages of the present application more clear, the present application is further described in detail below through the accompanying drawings and embodiments. However, it should be understood that the specific embodiments described herein are only used to explain the present application and are not used to limit the scope of the present application. Furthermore, in the following description, descriptions of well-known structures and technologies are omitted to avoid unnecessarily confusing the concepts of the present application.

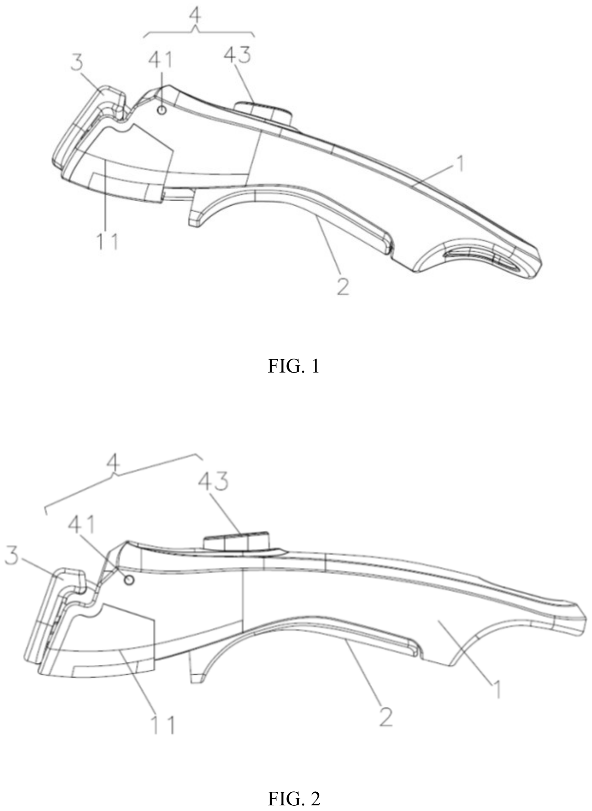

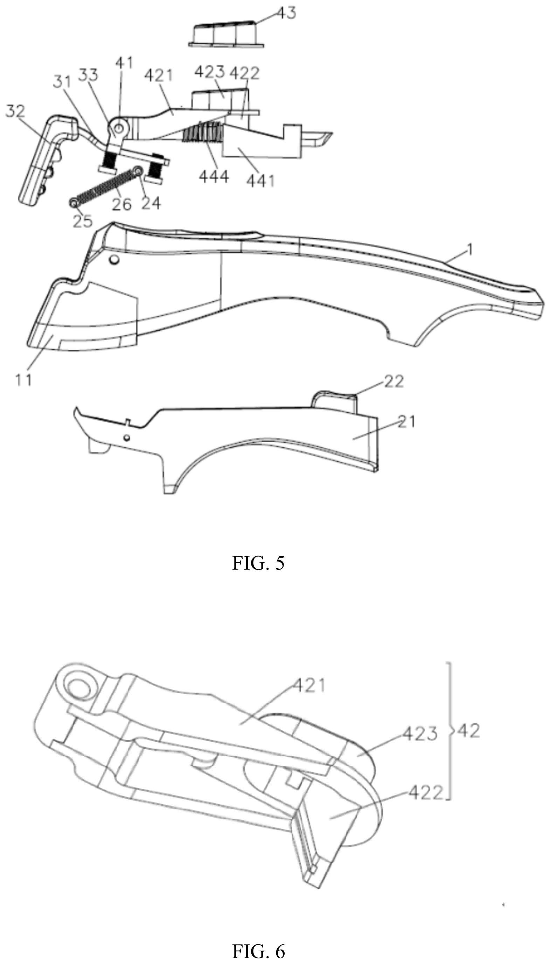

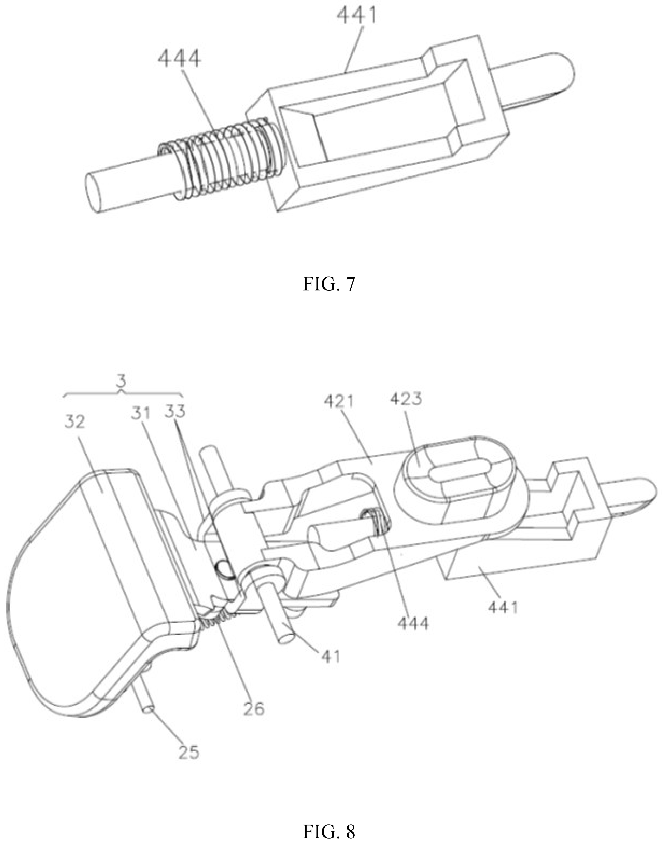

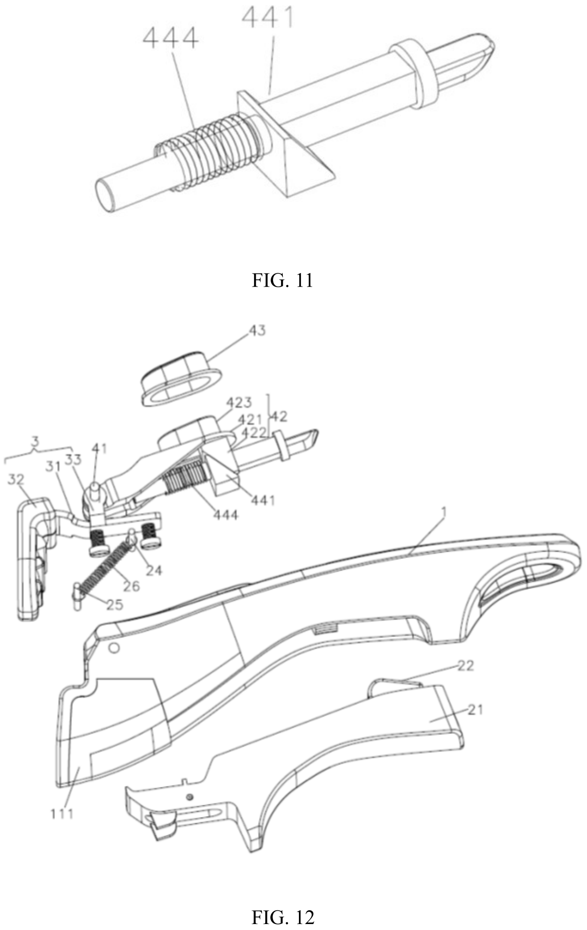

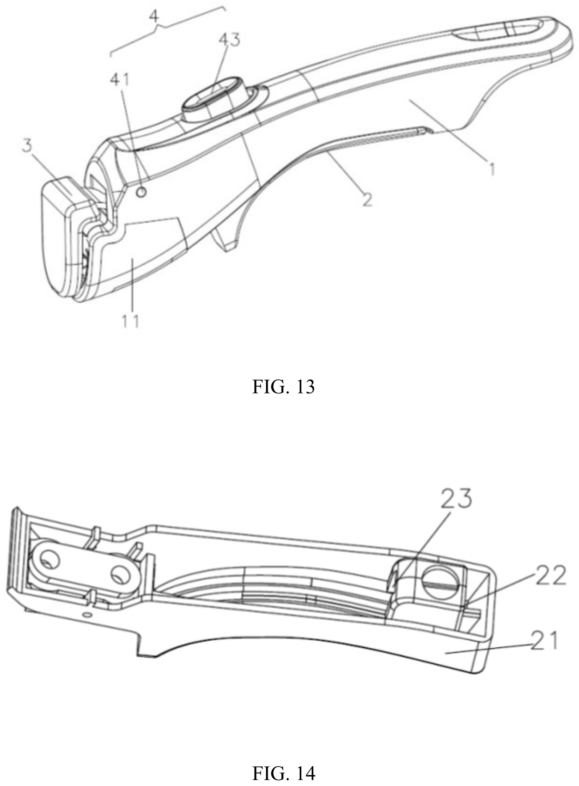

Embodiment 1: Referring to FIGS. 1 to 13, a detachable pot handle includes an upper handle 1 and a lower handle 2 arranged on the upper handle 1 and capable of being opened and closed, where the upper handle 1 is provided with a clamping device 3 for clamping a utensil (generally referred to as a pot, etc.), the upper handle 1 is provided with a quick-release mechanism 4 for prompting the upper handle 1 to be restored and the clamping device 3 to be released, the quick-release mechanism 4 includes a positioning pin 41 arranged on the upper handle 1, a rotating member 42 rotating back and forth with the positioning pin 41 as a fulcrum is arranged inside the upper handle 1, a pressing member 43 is arranged on the rotating member 42, a sliding assembly 44 sliding back and forth along the length direction of the upper handle 1 is arranged inside the upper handle 1, the rotating member 42 is prompted to rotate after the pressing member 43 is started, the rotating member 42 will prompt the sliding assembly 44 to slide forward, and finally the clamping device 3 can be released and the lower handle 2 restores the initial state (that is, an opened state), a front fixing seat 45 and a rear fixing seat 46 for limiting the forward and backward movement of the sliding assembly 44 are arranged inside the upper handle 1, the front fixing seat 45 and the rear fixing seat 46 can prompt the sliding assembly 44 to side back and forth along the length direction (front-back direction) of the upper handle 1, and both the front fixing seat 45 and the rear fixing seat 46 are integrally formed with the upper handle 1. The structure is simple, the production and the manufacture are convenient, the production cost is reduced, the structure is firmer, the stability in use is better, and the service life is conductive to being prolonged.

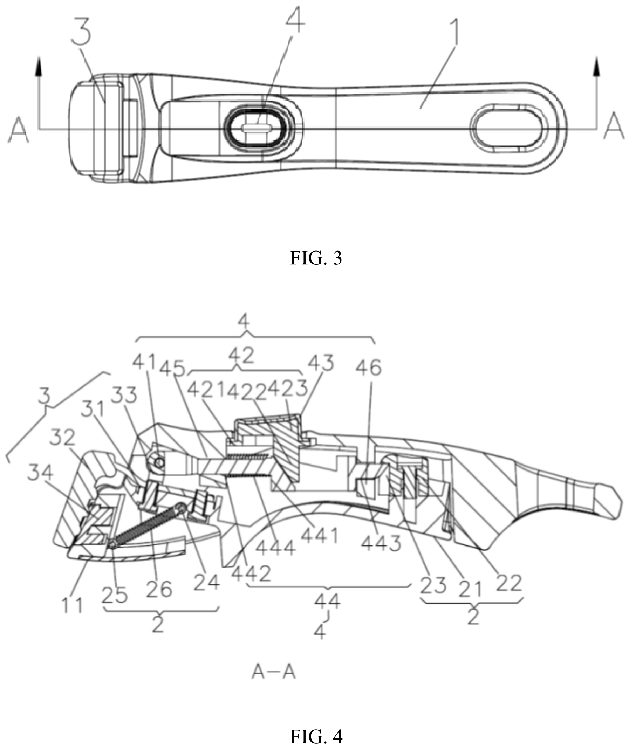

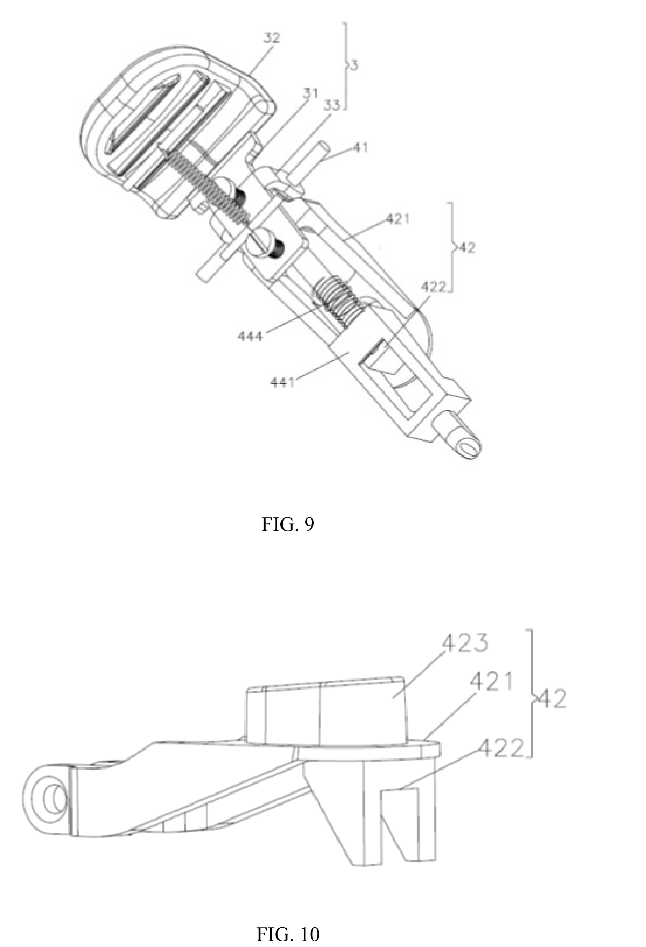

Embodiment 2: It can be explained on the basis of Embodiment 1, as shown in FIGS. 1, 2, 4, 5, 6, 7, 8, 9, 10, 11, 12 and 13, the rotating member 42 includes a rotating body 421 arranged on the positioning pin 41, a push rod 422 is arranged on a lower end surface of one side of the rotating body 421, a protrusion 423 is arranged on an upper end surface of one side of the rotating body 421, a pressing member 43 is arranged on the protrusion 423, the downward movement of the push rod 422 promotes the forward movement of the sliding assembly 44, an upper slope is arranged on the push rod 422, the sliding assembly 44 includes a sliding member 441 arranged inside the upper handle 1 and moving back and forth, a front through hole 442 is formed in the front fixing seat 45, a rear through hole 443 is formed in the rear fixing seat 46, the front end of the sliding member 441 slides back and forth in the front through hole 442, and the rear end of the sliding member 441 slides back and forth in the rear through hole 443, a lower slope matched with the upper slope is arranged on the sliding member 441, which is conducive to the sliding of the sliding member 441 back and forth, and a reset member 444 is arranged on the sliding member 441 contacting the front fixing seat 45, which is conducive to the return of the sliding member 441, where the reset member 444 adopts a spring, which is easy to implement. As shown in FIGS. 4, 5, 6, 7, 8 and 9, one embodiment of the sliding member 441 is that a mounting hole for the push rod 422 to move back and forth is formed inside the sliding member 441, and the lower slope is arranged on one side of the mounting hole. As shown in FIGS. 10, 11, 12 and 13, another embodiment of the sliding member 441 is that a lower slope is arranged on the sliding member 441. It can be seen that there are various types and a large range of choices.

As shown in FIGS. 4, 5, 6, 8, 9, 10 and 12, it is further explained that the rotating body 421, the push rod 422 and the protrusion 423 are integrally formed, which greatly reduces the difficulty of production and manufacturing, reduces the production and manufacturing cost, and is also conductive to improving the stability of use and prolonging the service life. It is further explained that the rotating member 42 is made of silicone material, which is conductive to reducing the production and manufacturing cost.

The pressing member 43 is a plastic button, which is convenient to produce and manufacture.

Embodiment 3: It can be explained on the basis of Embodiment 1 or Embodiment 2, as shown in FIGS. 4, 5, 8, 9 and 12, the clamping device 3 includes a connecting rod 31 fixedly connected to a front end of the lower handle 2, a rake body integrally formed with the connecting rod 31 is arranged on the connecting rod 31, a front locking seat 32 is arranged on the rake body, a positioning disc 33 is arranged on the connecting rod 31, the positioning pin 41 passes through the positioning disc 33, which is conducive to the up and down rotation of the connecting rod 31 with the positioning pin 41 as the fulcrum, and the rake body and the front locking seat 32 form a clamping utensil (generally referring to pots, etc.) with the front end surface of the upper handle 1. It can be further explained that the connecting rod 31 and the lower handle 2 are fixedly connected together via a fastener, and in this embodiment, the fastener is a bolt, a rivet or a screw, and generally two are used, which is not only easy to implement but also makes the connection more stable and reliable. A rear locking seat 34 is arranged on the upper handle 1 corresponding to the front locking seat 32, which is more conducive to clamping the utensil. The connecting rod 31 and the rake body are integrally formed of stainless steel, which greatly improves the strength of the structure.

Embodiment 4: It can be explained on the basis of Embodiment 1 or Embodiment 2 or Embodiment 3, as shown in FIGS. 4, 5, 8, 12 and 14, the lower handle 2 includes a handle body 21 fixedly connected to the clamping device 3, a limiting seat 22 is arranged on an upper end surface of a rear side of the handle body, an inclined surface is arranged on a rear end surface of the sliding assembly 44, a clamping groove 23 used to be matched with the rear end surface of the sliding assembly 44 with the inclined surface is arranged on the limiting seat 22, which is conductive to fixing the utensil after the clamping device 3 clamps the utensil, a fixing rod 24 is arranged on a lower end surface of a front part of the handle body 21, a limiting rod 25 is arranged on a lower end surface of a front part of the upper handle 1, and the fixing rod 24 and the limiting rod 25 are connected via a return member 26. When the sliding assembly 44 moves forward, the limiting seat 22 is disengaged from the sliding assembly 44. In this way, under the action of the return force of the return member 26, the handle body 21 is rotated downward with the positioning pin 41 as the fulcrum. In this way, the handle body 21 and the upper handle 1 are in an unfolded state, and the clamping device 3 is also in a released state, thereby achieving the purpose of unlocking. It can be further explained that the return member 26 adopts a spring, which is easy to implement. It can be more further explained that the limiting seat 22 and the handle body 21 are fixedly connected via a fixing member, and the fixing member is a bolt, a rivet or a screw, which is easy to implement. Finally, It can be explained that a mounting chamber for opening and closing the handle body 21 is arranged on the upper handle 1, which is conductive to the opening and closing of the handle body 21.

As shown in FIGS. 1, 2, 4, 5, 12 and 13, a protective cover 11 is arranged below a front end of the upper handle 1. The protective cover 11 is made of metal material, which is conductive to avoiding burns to the components caused by high temperature of the clamped utensil and greatly prolonging the service life.

As shown in FIGS. 1 to 14, when the present application needs to clamp the pot (utensil), it is only necessary to press the handle body 21 upward, and then the handle body 21 rotates upward with the positioning pin 41 as a fulcrum, and at the same time, the connecting rod 31 rotates downward with the positioning pin 41 as a fulcrum, so that the front locking seat 32 and the rear locking seat 34 will clamp the utensil (pot) relatively, and then due to the upward pressing of the handle body 21, the inclined surface on the rear end surface of the sliding member 441 slides into the clamping groove 23 in the limiting seat 22, and finally the clamped utensil (pot) is fixed and locked, which is convenient for the user to use normally.

As shown in FIGS. 1 to 14, when the present application needs to disassemble the pot (utensil), it is only necessary to press the pressing member 43, and then the pressing member 43 will drive the rotating body 421 to rotate downward with the positioning pin 41 as the fulcrum. The push rod 422 on the rotating body 421 has an upper slope, and there is a lower slope on the sliding member 441. In this way, the upper slope of the push rod 422 moves downward along the lower slope on the sliding member 441, which will prompt the sliding member 441 to slide forward, and then compress the reset member 444 at the same time. At the same time, under the action of the rebound force of the return member 26 between the fixing rod 24 and the limiting rod 25, the inclined surface on the rear end surface of the sliding member 441 is finally disengaged from the clamping groove 23 on the limiting seat 22, and the handle body 21 is in the unfolded state, which also makes the connecting rod 31 rotate upward, so that the front locking seat 32 and the rear locking seat 34 will make the clamped utensil (pot) in a released state, thereby achieving the effect of disassembly.

The standard parts used in this application document can all be purchased from the market, and the specific connection methods of each part adopt conventional means such as mature bolts and rivets in the prior art, which will not be described in detail here.

It should be noted that, although the above embodiments have been described herein, the patent protection scope of the present application is not limited thereby. Therefore, based on the innovative concept of the present application, changes and modifications to the embodiments described herein, or equivalent structural or equivalent process transformations made using the contents of the summary and the drawings of the present application, and direct or indirect application of the above technical solutions in other related technical fields are all included in the protection scope of the present application patent.

## Claims

1. A detachable pot handle, comprising an upper handle (1) and a lower handle (2) arranged on the upper handle (1) and capable of be opened and closed, the upper handle (1) being provided with a clamping device (3) for clamping a utensil, the upper handle (1) being provided with a quick-release mechanism (4) for prompting the upper handle (1) to be restored and the clamping device (3) to be released, wherein the quick-release mechanism (4) comprises a positioning pin (41) arranged on the upper handle (1); a rotating member (42) rotating back and forth with the positioning pin (41) as a fulcrum is arranged inside the upper handle (1); a pressing member (43) is arranged on the rotating member (42); a sliding assembly (44) sliding back and forth along the length direction of the upper handle (1) is arranged inside the upper handle (1); a front fixing seat (45) and a rear fixing seat (46) for limiting the forward and backward movement of the sliding assembly (44) are arranged inside the upper handle (1); and both the front fixing seat (45) and the rear fixing seat (46) are integrally formed with the upper handle (1).

2. The detachable pot handle according to claim 1, wherein the rotating member (42) comprises a rotating body (421) arranged on the positioning pin (41), a push rod (422) is arranged on a lower end surface of one side of the rotating body (421), a protrusion (423) is arranged on an upper end surface of one side of the rotating body (421), the pressing member (43) is arranged on the protrusion (423), an upper slope is arranged on the push rod (422), the sliding assembly (44) comprises a sliding member (441) arranged inside the upper handle (1) and moving back and forth, a front through hole (442) is formed in the front fixing seat (45), a rear through hole (443) is formed in the rear fixing seat (46), a lower slope matched with the upper slope is arranged on the sliding member (441), and a reset member (444) is arranged on the sliding member (441) contacting the front fixing seat (45).

3. The detachable pot handle according to claim 2, wherein a mounting hole for the push rod (422) to move back and forth is formed inside the sliding member (441), and the lower slope is arranged on one side of the mounting hole.

4. The detachable pot handle according to claim 2, wherein the lower slope is arranged on the sliding member (441).

5. The detachable pot handle according to claim 3, wherein the rotating body (421), the push rod (422) and the protrusion (423) are integrally formed.

6. The detachable pot handle according to claim 4, wherein the clamping device (3) comprises a connecting rod (31) fixedly connected to a front end of the lower handle (2); a rake body integrally formed with the connecting rod (31) is arranged on the connecting rod (31); a front locking seat (32) is arranged on the rake body; a positioning disc (33) is arranged on the connecting rod (31); and the positioning pin (41) passes through the positioning disc (33).

7. The detachable pot handle according to claim 6, wherein the connecting rod (31) and the lower handle (2) are fixedly connected together via a fastener.

8. The detachable pot handle according to claim 6, wherein a rear locking seat (34) is arranged on the upper handle (1) corresponding to the front locking seat (32).

9. The detachable pot handle according to claim 8, wherein the lower handle (2) comprises a handle body (21) fixedly connected to the clamping device (3); a limiting seat (22) is arranged on an upper end surface of a rear side of the handle body (21); an inclined surface is arranged on a rear end surface of the sliding assembly (44); a clamping groove (23) used to be matched with the rear end surface of the sliding assembly (44) with the inclined surface is arranged on the limiting seat (22); a fixing rod (24) is arranged on a lower end surface of a front part of the handle body (21); a limiting rod (25) is arranged on a lower end surface of a front part of the upper handle (1); and the fixing rod (24) and the limiting rod (25) are connected via a return member (26).

10. The detachable pot handle according to claim 9, wherein a protective cover (11) is arranged below a front end of the upper handle (1).
